# EUROPEAN PATENT APPLICATION

(11) **EP 4 318 766 A1**
(43) Date of publication of application: **07.02.2024**
(21) Application number: 22919475.8
(22) Date of filing: 14.01.2022
(51) Int. Cl.: H01M 50/289

(54) **INSULATING PATCH, BATTERY CELL, BATTERY AND DEVICE**

(71) Applicant: Contemporary Amperex Technology Co., Limited, Ningde, Fujian 352100 (CN)
(72) Inventor: CHEN, Xinxiang, Ningde, Fujian 352100 (CN); ZHANG, Xiaoping, Ningde, Fujian 352100 (CN); ZHENG, Yulian, Ningde, Fujian 352100 (CN); LIU, Yanyu, Ningde, Fujian 352100 (CN); LIN, Denghua, Ningde, Fujian 352100 (CN)
(74) Representative: Ziebig Hengelhaupt Intellectual Property Attorneys Patentanwaltskanzlei PartGmbB
(86) International application number: PCT/CN2022/072090
(87) International publication number: WO 2023/133823

(57) **Abstract**

The present disclosure provides an insulation patch (224), a battery cell (22), a battery (2), and a device. An electrode assembly (223) is coated with the insulation patch (224), and a side edge of the insulation patch (224) has a hot-melt region (2241) and a non-hot-melt region (2242). The hot-melt region (2241) is configured to hot melt with a lower plastic (2212), and the non-hot-melt region (2242) is lower than the hot-melt region (2241). After the electrode assembly (223) coated with the insulation patch (224) is mounted to a shell (222), and the hot-melt region (2241) of the insulation patch (224) is hot melted to the lower plastic (2212) of a top cover assembly (221), when a top cover member (2211) and the shell (222) are welded together by using a laser, the non-hot-melt region (2242) of the insulation patch (224) is lower than the hot-melt region (2241), preventing the non-hot-melt region (2242) of the insulation patch (224) from interfering with a welding position between the top cover member (2211) and the shell (222). Therefore, when the top cover member (2211) and the shell (222) are welded, no dry joint occurs, which helps improve sealing between the top cover member (2211) and the shell (222), prevents leakage of the electrode assembly (223), and further improves safety of the electrode assembly (223).

## Description

### TECHNICAL FIELD

The present disclosure relates to the battery field, and in particular, to an insulation patch, a battery cell, a battery, and a device.

### BACKGROUND

Currently, with increasing vehicle electrification, China has seen an increasing number of electric vehicles. With the development of the electric vehicles, batteries become the key to sustainable development of the automobile industry. A battery production technology is another important factor affecting the development of the electric vehicles. In the production process of a battery, when a bare electrochemical cell is mounted in an accommodating space formed by a shell and a top cover, an insulation patch needs to be wrapped outside the bare electrochemical cell, to achieve insulation between the bare electrochemical cell and the shell.

However, in the conventional technology, due to interference from an insulation patch, when a shell and a top cover are welded by using a laser, poor welding may occur, thereby causing poor sealing between the shell and the top cover, and even causing a leakage of an electrochemical cell in the shell and the top cover, which affects safety of the electrochemical cell.

### SUMMARY

In view of the foregoing problems, the present disclosure provides an insulation patch, a battery cell, a battery, and a device. A non-hot-melt region of the insulation patch does not interfere with a welding position between a top cover member and a shell. Therefore, when the top cover member and the shell are welded, no dry joint occurs, which helps improve sealing between the top cover member and the shell, prevents leakage of an electrode assembly, and improves safety of the electrode assembly.

According to a first aspect, the present disclosure provides an insulation patch, configured to coat an electrode assembly, and a side edge of the insulation patch has a hot-melt region and a non-hot-melt region. The hot-melt region is configured to hot melt with a lower plastic, and the non-hot-melt region is lower than the hot-melt region.

In the technical solution of this embodiment of the present disclosure, after the electrode assembly coated with the insulation patch is mounted to the shell, and the hot-melt region of the insulation patch is hot melted to the lower plastic of a top cover assembly, when a top cover member and the shell are welded together by using a laser, the non-hot-melt region of the insulation patch is lower than the hot-melt region, preventing the non-hot-melt region of the insulation patch from interfering with a welding position between the top cover member and the shell. Therefore, when the top cover member and the shell are welded, no dry joint occurs, which helps improve sealing between the top cover member and the shell, prevents leakage of the electrode assembly, and further improves safety of the electrode assembly.

In some embodiments, an opening in a shape of a rectangle is formed when the insulation patch coats the electrode assembly. A side wall of the insulation patch corresponding to a long edge of the rectangle has a plurality of the hot-melt regions. A groove is formed in adjacent two of the hot-melt regions, so that the non-hot-melt region is lower than the hot-melt region.

In this embodiment, a groove is formed between adjacent hot-melt regions, so that the non-hot-melt region is lower than the hot-melt region, and a plurality of hot-melt regions are disposed on a long edge of the opening of the insulation patch, to better match with a hot-melt position of the lower plastic, so that a hot-melt region of the insulation patch is better hot melted together with the hot-melt position of the lower plastic, and connection strength of the insulation patch and the lower plastic is increased.

In some embodiments, the groove is in a square or arc shape. The groove is designed as a square or an arc shape, so that the groove is easier to be formed in the adjacent hot-melt region and easy to process.

In some embodiments, a depth of the groove ranges from 2 mm to 5 mm. In this embodiment, a phenomenon that the non-hot-melt region of the insulation patch may interfere with the welding position between the top cover member and the shell because the depth of the groove is too small (for example, less than 2 mm) can be further avoided. In this embodiment, a phenomenon that a part of the electrode assembly may be exposed and be in contact with the shell when the electrode assembly is coated with the insulation patch because the groove is excessively deep (for example, greater than 5 mm) can be further avoided.

In some embodiments, a side wall of the insulation patch corresponding to a short edge of the rectangle has one hot-melt region. In this design manner, the insulation patch can better match the hot-melt position of the lower plastic, so that the hot-melt region of the insulation patch is better hot melted together with the hot-melt position of the lower plastic.

In some embodiments, an orthographic projection along a thickness direction of the insulation patch when the insulation patch is unfolded is I-shaped, and includes a first part located in the middle and a second part and a third part located at two ends of the first part. The first part is configured to cover a bottom surface of the electrode assembly, and the second part and the third part are folded separately toward the electrode assembly, so that the second part and the third part that do not protrude from the first part respectively cover a first side and a second side of the electrode assembly that are opposite to each other, where the first side and the second side respectively correspond to two long edges of the rectangle. The second part and the third part that protrude from the first part are folded separately toward the electrode assembly, and cover a third side and a fourth side of the electrode assembly that are opposite to each other, where the third side and the fourth side respectively correspond to two short edges of the rectangle.

In this embodiment, the orthographic projection along a thickness direction of the insulation patch when the insulation patch is unfolded is I-shaped, so that a manner of coating the electrode assembly with the insulation patch is simpler, and time for assembling can be reduced.

In some embodiments, there is an overlap region when the second part and the third part that protrude from the first part cover the third side and the fourth side, and the overlap region forms the hot-melt region. The hot-melt region is formed by using the foregoing overlap region, so that strength of the hot-melt region can be increased.

In some embodiments, chamfered spacers are disposed at corner positions of the second part and the third part that are away from the first part. By disposing the chamfered spacers, an overlap region between the second part and the third part can be prevented from interfering with the welding position between the top cover member and the shell due to bulge.

In some embodiments, an angle of a chamfered spacer ranges from 4 degrees to 20 degrees. In this embodiment, a phenomenon that the non-hot-melt region of the insulation patch may interfere with the welding position between the top cover member and the shell because the angle of the chamfered spacer is too small (for example, less than 4 degrees) can be further avoided. In this embodiment, a phenomenon that a part of the electrode assembly may be exposed and be in contact with the shell when the electrode assembly is coated with the insulation patch because the angle of the chamfered spacer is too large (for example, greater than 20 degrees) can be further avoided.

In some embodiments, a shape of the chamfered spacer is a triangle or a trapezoid. The shape of the chamfered spacer is designed as a triangle or a trapezoid, so that an overlap region formed by the second part and the third part after the electrode assembly is coated can better match the hot-melt position of the lower plastic, and the chamfered spacer is easier to be processed.

According to a second aspect, the present disclosure further provides a battery cell, including: a top cover assembly, a shell, an electrode assembly, and an insulation patch in any one of the foregoing embodiments. The top cover assembly includes a top cover member and a lower plastic bonded to the top cover member. The shell and the top cover assembly form an enclosed space. The electrode assembly is located in the enclosed space. The insulation patch coats the electrode assembly in the enclosed space, and is hot melted to the lower plastic via a hot-melt region. A pole on the top cover member is connected to a tab of the electrode assembly.

In the technical solution of this embodiment, the battery cell includes the insulation patch in any one of the foregoing embodiments. Therefore, in this embodiment, after the electrode assembly coated with the insulation patch is mounted to the shell, and the hot-melt region of the insulation patch is hot melted to the lower plastic of the top cover assembly, when the top cover member and the shell are welded together by using a laser, a non-hot-melt region of the insulation patch is lower than the hot-melt region, preventing the non-hot-melt region of the insulation patch from interfering with a welding position between the top cover member and the shell. Therefore, when the top cover member and the shell are welded, no dry joint occurs, which helps improve sealing between the top cover member and the shell, prevents leakage of the electrode assembly, and improves safety of the electrode assembly.

In some embodiments, the battery cell further includes a switching member, the switching member is located between the top cover member and the electrode assembly, and the pole on the top cover member is connected to the tab of the electrode assembly by using the switching member. In this embodiment, the pole on the top cover member is connected to the tab of the electrode assembly by using the switching member.

According to a third aspect, the present disclosure further provides a battery, where the battery includes a plurality of the battery cells in any one of the foregoing embodiments.

According to a fourth aspect, the present disclosure further provides a device using a battery as a power supply, and the battery in this embodiment is the battery in any one of the foregoing embodiments.

### BRIEF DESCRIPTION OF THE DRAWINGS

By reading the detailed description of the following preferred embodiments, various other advantages and benefits will be clear and apparent to those of ordinary skill in the art. The accompanying drawings are provided merely to illustrate the preferred embodiments, rather than to limit the present disclosure. Same components are represented by same reference numerals throughout the accompanying drawings. In the accompanying drawings:
FIG. 1 is a schematic diagram of a structure of a vehicle according to some embodiments of the present disclosure;
FIG. 2 is an exploded diagram of a battery according to some embodiments of the present disclosure;
FIG. 3 is an exploded diagram of a battery cell according to some embodiments of the present disclosure;
FIG. 4 is a front view of a battery cell according to some embodiments of the present disclosure;
FIG. 5 is a schematic diagram of a structure of a battery cell according to some embodiments of the present disclosure;
FIG. 6 is a schematic diagram of a structure of an insulation patch when an electrode assembly is coated according to some embodiments of the present disclosure;
FIG. 7 is a schematic diagram of a positional relationship between a top cover assembly and an insulation patch according to some embodiments of the present disclosure;
FIG. 8 is an unfolded diagram of an insulation patch according to some embodiments of the present disclosure; and
FIG. 9 is an unfolded diagram of another insulation patch according to some embodiments of the present disclosure.

Reference numerals of the accompanying drawings in a specific implementation are as follows:
1 - vehicle; 2 - battery; 3 - controller; 4 - motor; 21 - case; 22 - battery cell; 211 - first case assembly; 212 - second case assembly; 213 - accommodating space; 221 - top cover assembly; 222 - shell; 223 - electrode assembly; 224 - insulation patch; 225 - switching member; 2211- top cover member; 2212 - lower plastic; 2241 - hot-melt region; 2242 - non-hot-melt region; 2243- arc-shaped groove; 2244 - square groove; H - depth of a groove; 2245 - first part; 2246 - second part; 2247 - third part; R - chamfered spacer; 5 -; 6 -; 7-.

### DETAILED DESCRIPTION OF THE EMBODIMENTS

Embodiments of the technical solutions of the present disclosure will be described in detail below with reference to the accompanying drawings. The following embodiments are merely used to more clearly illustrate the technical solutions of the present disclosure. Therefore, these embodiments are merely exemplary and are not intended to limit the protection scope of the present disclosure.

Unless otherwise defined, all technical and scientific terms used in this specification have the same meanings as those commonly understood by those skilled in the art of the present disclosure. The terms used in this specification are merely intended to describe specific embodiments, and are not intended to limit the present disclosure. The terms "includes" and "has" in the specification and claims of the present disclosure and the foregoing description of the accompanying drawings and any modification thereof are intended to cover non-exclusive inclusion.

In the description of the embodiments of the present disclosure, technical terms "first", "second", and the like are used merely to distinguish different objects, and cannot be understood as indicating or implying relative importance or implying a quantity, a specific sequence, or a primary and secondary relationship of the indicated technical features. In the description of the embodiments of the present disclosure, "a plurality of' means two or more, unless otherwise specifically defined.

The "embodiment" mentioned herein means that a specific feature, structure or characteristic described in combination with the embodiment can be included in at least one embodiment of the present disclosure. The phrase appearing in different parts of the specification does not necessarily refer to the same embodiment or an independent or alternative embodiment exclusive of other embodiments. It may be explicitly or implicitly appreciated by those skilled in the art that the embodiments described herein may be combined with another embodiment.

In the description of the embodiments of the present disclosure, the term "and/or" merely describes associations between associated objects, and it indicates three types of relationships. For example, A and/or B may indicate that A exists alone, A and B exist at the same time, or B exists alone. In addition, the character "/" in this specification generally indicates that the associated objects are in an "or" relationship.

In the description of the embodiments of the present disclosure, the technical terms such as "central", "longitudinal", "transverse", "length", "width", "thickness", "upper", "lower", "front", "back", "left", "right", "vertical", "horizontal", "top", "bottom", "inner", "outer", "clockwise", "anticlockwise", "axial direction", "radial direction" and "circumferential direction" are orientations or positional relationships shown based on the accompanying drawings. These terms are merely intended to facilitate describing the embodiments of the present disclosure and make the description simple, rather than to indicate or imply that a mentioned device or element must have a specific orientation or be constructed and operated in the specific orientation. Therefore, these terms cannot be construed as a limitation to the present disclosure.

In the description of the embodiments of the present disclosure, unless otherwise clearly specified and defined, the technical terms such as "mounting", "interconnection", "connection" and "fixation" should be understood in a broad sense. For example, the "connection" may be a fixed connection, removable connection or integral connection; may be a mechanical connection or electrical connection; may be a direct connection or indirect connection through a medium; and may be a communication or interaction between two elements. Those of ordinary skill in the art may understand specific meanings of the foregoing terms in the embodiments of the present disclosure based on a specific situation.

At present, with the development of the market, a power battery is widely used. The power battery is not only applied to a power storage system such as a hydraulic power, a fire power, a wind power, and a solar power plant, but also widely used in electric transportation, such as an electric bicycle, an electric motorcycle, and an electric vehicle, and various fields, such as military equipment, and aerospace. With the development of electric transportation, military equipment, aerospace, and the like, batteries have become the key to sustainable development of the automotive industry. A battery technology is another important factor in the development of electric devices such as electric transportation, military equipment, and aerospace.

The inventor notes that, in a production process of a battery, when a bare electrochemical cell is mounted in an accommodating space formed by a shell and a top cover, an insulation patch needs to be wrapped outside the bare electrochemical cell, to achieve an effect of insulation between the bare electrochemical cell and the shell. However, due to interference from the insulation patch, when a shell and a top cover are welded by using a laser, poor welding may occur, thereby causing poor sealing between the shell and the top cover, and even causing a leakage of an electrochemical cell in the shell and the top cover, which affects safety of the electrochemical cell.

Based on the foregoing, to resolve the foregoing problems, the applicant has designed an insulation patch, a battery cell, a battery, and a device after in-depth research. A non-hot-melt region of the insulation patch does not interfere with a welding position of the top cover and the shell. Therefore, when a top cover member and the shell are welded, no dry joint occurs, which helps improve sealing between the top cover member and the shell, prevents leakage of an electrode assembly, and improves safety of the electrode assembly.

The battery mentioned in the present disclosure includes battery cells. The battery may include a rechargeable lithium battery, a lithium-ion primary battery, a lithium sulfide battery, a sodium lithium-ion battery, a sodium ion battery, a magnesium ion battery, or the like. This is not limited in the embodiments of the present disclosure. The battery is applicable to various electric devices.

The electric device may be a mobile phone, a portable device, a laptop, an electric motorcycle, an electric vehicle, a steamship, a spacecraft, an electric toy, an electric tool, or the like. The vehicle may be a fuel vehicle, a gas vehicle, or a new energy vehicle, and the new energy vehicle may be a pure electric vehicle, a hybrid vehicle, an extended-range vehicle, or the like. For example, the spacecraft includes an airplane, a rocket, a spaceshuttle, and a spaceship; the electric toy includes a stationary or mobile electric toy, such as a game console, an electric toy car, an electric toy ship, and an electric toy plane; and the electric tool includes a metal cutting electric tool, a grinding electric tool, an assembly electric tool, and a railway electric tool, such as an electric drill, an electric grinding machine, an electric wrench, an electric screwdriver, an electric hammer, an electric impact drill, a concrete vibrator, and an electric planer. The embodiments of the present disclosure set no special limitation on the foregoing electric device.

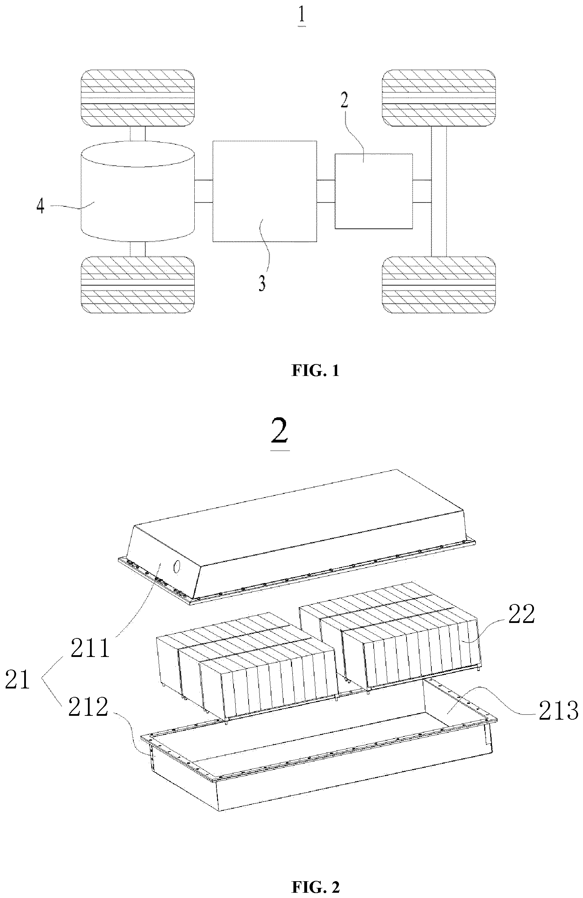

According to some embodiments of the present disclosure, this embodiment provides a device using a battery as a power supply. The device can be, for example, but is not limited to, a vehicle, a ship, or an aircraft. As shown in FIG. 1, FIG. 1 is a schematic diagram of a structure of one vehicle according to some embodiments of the present disclosure. A battery 2 is disposed inside a vehicle 1, and the battery 2 can be disposed at a bottom, a head, or a tail of the vehicle 1. The battery 2 can be configured to supply power to the vehicle 1. For example, the battery 2 may be used as an operational power supply of the vehicle 1.

The vehicle 1 can further include a controller 3 and a motor 4. The controller 3 is configured to control the battery 2 to supply power to the motor 4, for example, is configured to enable, navigate, and drive the vehicle 1.

In some embodiments of the present disclosure, the battery 2 can be used not only as the operational power supply of the vehicle 1, but also as a driving power supply of the vehicle 1, in place of or partly in place of fuel or natural gas to provide a driving power for the vehicle 1.

According to some embodiments of the present disclosure, this embodiment provides a battery. FIG. 2 is an exploded diagram of the battery 2 according to some embodiments of the present disclosure. As shown in FIG. 2, the battery 2 includes a case 21 and a battery cell 22, and the battery cell 22 is accommodated in the case 21. The battery cell 22 may be formed by a plurality of battery modules. The case 21 is configured to accommodate the battery cell 22, and the case 21 may be of a plurality of structures. In some embodiments, the case 21 can include a first case assembly 211 and a second case assembly 212, the first case assembly 211 and the second case assembly 212 are mutually covered, and the first case assembly 211 and the second case assembly 212 jointly define an accommodating space 213 for accommodating the battery cell 22. The second case assembly 212 can be of a hollow structure with one end opening, the first case assembly 211 is a platy structure, and the first case assembly 211 covers an opening side of the second case assembly 212, so as to form the case 21 with the accommodating space 213. Both the first case assembly 211 and the second case assembly 212 can be hollow structures with each side opening. An opening side of the first case assembly 211 covers an opening side of the second case assembly 212, so as to form the case 21 with the accommodating space 213. Certainly, the first case assembly 211 and the second case assembly 212 may be in a plurality of shapes, such as a cylinder or a cuboid.

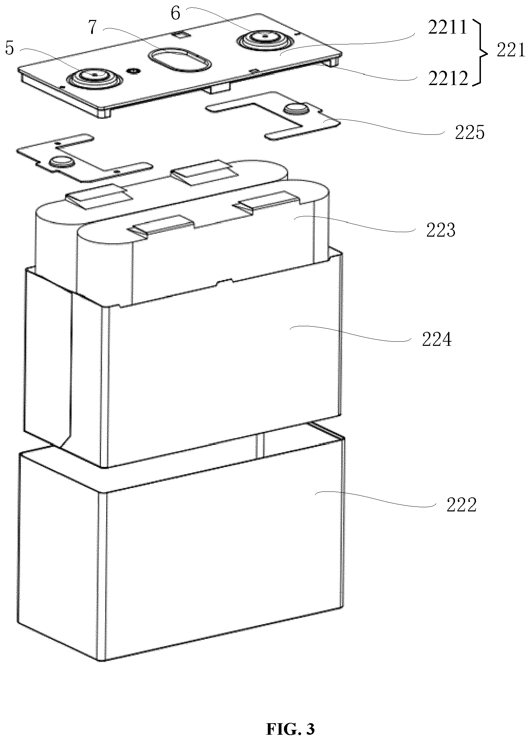

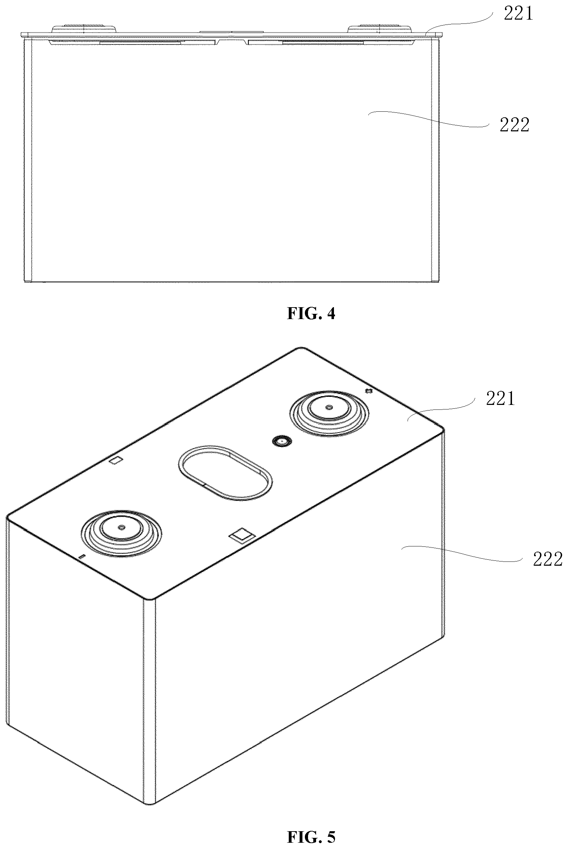

According to some embodiments of the present disclosure, this embodiment provides a battery cell. As shown in FIG. 3 to FIG. 5, FIG. 3 is an exploded view of the battery cell according to some embodiments of the present disclosure. FIG. 4 is a front view of the battery cell according to some embodiments of the present disclosure. FIG. 5 is a schematic diagram of a structure of the battery cell according to some embodiments of the present disclosure.

As shown in FIG. 3 to FIG. 5, the battery cell includes a top cover assembly 221, a shell 222, an electrode assembly 223, and an insulation patch 224. The top cover assembly 221 includes a top cover member 2211 and a lower plastic 2212 bonded to the top cover member 2211. The shell 222 and the top cover assembly 221 form an enclosed space. The electrode assembly 223 is located in the enclosed space. The insulation patch 224 coats the electrode assembly 223 in the enclosed space, and is hot melted to the lower plastic 2212 via a hot-melt region. A pole on the top cover member 2211 is connected to a tab of the electrode assembly 223.

The shell 222 and the top cover assembly 221 form a shell, and the shell can be of a plurality of shapes, such as a cylinder or a cuboid. A shape of the shell can be determined according to a specific shape of the electrode assembly 223. For example, if the electrode assembly 223 is in a cylindrical structure, the shell can be in a cylindrical structure. If the electrode assembly 223 is a cuboid structure, the shell can be in a cuboid structure.

The battery cell further includes an electrolyte. The shell 222 can accommodate an electrolyte, so as to provide an enclosed space for the electrode assembly and the electrolyte.

A shell 224 may be in a structure with one side opening, and there is only one top cover assembly 221 disposed and the top cover assembly 221 covers an opening of the shell 224. Alternatively, the shell 224 may be in a structure with two sides opening, two top cover assemblies 221 are provided, and the two top cover assemblies 221 respectively cover two openings of the shell 224.

For example, the top cover assembly 221 is connected to the shell 224 by means of welding, bonding, clamping, or other means.

In some embodiments, with reference to FIG. 3, the battery cell may further include a cathode terminal 5, an anode terminal 6, and a pressure relief mechanism 7, and the cathode terminal 5, the anode terminal 6, and the pressure relief mechanism 7 are all mounted on the top cover assembly 221. Both the cathode terminal 5 and the anode terminal 6 are configured to be electrically connected to a cathode plate and an anode plate, so as to lead out electric energy generated by the electrode assembly 223. The pressure relief mechanism 7 is configured to discharge internal pressure of the battery cell when the internal pressure of the battery cell reaches a predetermined value.

For example, the pressure relief mechanism 7 is located between the cathode terminal 5 and the anode terminal 6, and the pressure relief mechanism 7 can be components such as an explosion-proof valve, an explosion-proof plate, an air valve, a pressure relief valve, or a safety valve.

There may be one or more electrode assemblies 223. For example, as shown in FIG. 3, there are two electrode assemblies 223.

The electrode assembly includes a cathode plate, an anode plate, and a separator. The battery cell works mainly depending on lithium ions to move between the cathode plate and the anode plate. The cathode plate includes a cathode current collector and a cathode active material layer, and a surface of the cathode current collector is coated with the cathode active material layer. The cathode current collector includes a cathode current collector part and a positive tab. The cathode current collector part is coated with the cathode active material layer, and the positive tab is not coated with the cathode active material layer. A lithium-ion battery is used as an example. A material of the cathode current collector may be aluminum, the cathode active material layer includes a cathode active material, and the cathode active material may be lithium cobalt oxides, lithium iron phosphate, ternary lithium, or lithium manganese. The anode plate includes an anode current collector and an anode active material layer, and a surface of the anode current collector is coated with the anode active material layer. The anode current collector includes an anode current collector part and an anode tab. The anode current collector part is coated with the anode active material layer, and the anode tab is not coated with the anode active material layer. A material of the anode current collector may be copper, the anode active material layer includes an anode active material, and the anode active material may be carbon or silicon. A material of the separator may be PP (polypropylene, polypropylene), PE (polyethylene, polyethylene), or the like.

According to some embodiments of the present disclosure, the battery cell further includes a switching member 225, the switching member 225 is located between the top cover member 2211 and the electrode assembly 223, and the pole on the top cover member 2211 is connected to the tab of the electrode assembly 223 by using the switching member 225. In this embodiment, the pole on the top cover member 2211 is connected to the tab of the electrode assembly 223 by using the switching member 225.

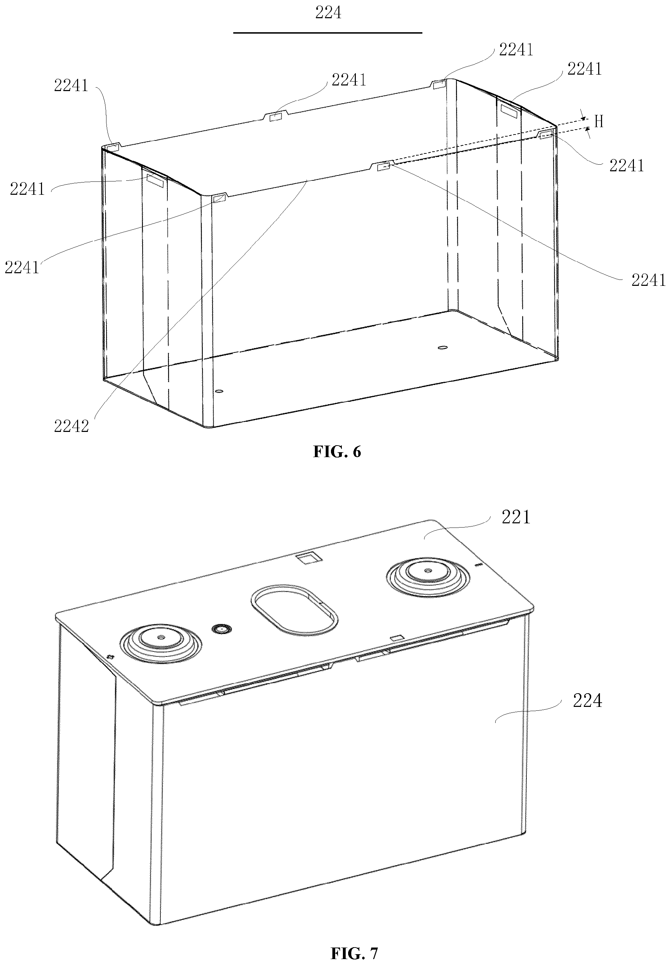

According to some embodiments of the present disclosure, this embodiment provides an insulation patch. With reference to FIG. 6, FIG. 6 is a schematic diagram of a structure of the insulation patch when an electrode assembly is coated according to some embodiments of the present disclosure. FIG. 7 is a schematic diagram of a positional relationship between the top cover assembly 221 and the insulation patch 224.

With reference to FIG. 3, the insulation patch 224 is configured to coat the electrode assembly 223. As shown in FIG. 6 and FIG. 7, a side edge of the insulation patch 224 has a hot-melt region 2241 and a non-hot-melt region 2242. The hot-melt region 2241 is configured to hot melt with a lower plastic 2212, and the non-hot-melt region 2242 is lower than the hot-melt region 2241.

For example, after coating the electrode assembly 223, the insulation patch 224 is mounted on the shell 222 together with the electrode assembly 223. When the insulation patch 224 and the electrode assembly 223 are mounted on the shell 222, contact of the shell 222 and the insulation patch 224 causes friction on the insulation patch 224, so that an upper edge of the insulation patch 224 is pulled up by a friction force. If the non-hot-melt region 2242 is higher than the hot-melt region 2241 or flush with the hot-melt region 2241, it may cause that the non-hot-melt region 2242 is higher than the lower plastic 2212 when the lower plastic 2212 is hot melted with the hot-melt region 2241. In addition, because the lower plastic 2212 is very thin, the non-hot-melt region 2242 may even exceed an upper surface of the lower plastic 2212 and be in contact with a part of side edge of the top cover member 2211, thereby causing poor welding when the top cover member 2211 and the shell 222 are welded by using a laser.

In the present disclosure, the non-hot-melt region 2242 is designed as being lower than the hot-melt region 2241, so that when the insulation patch 224 and the electrode assembly 223 are mounted on the shell 222, an avoidance space is provided for the insulation patch 224 when pulled up by friction, to avoid that the non-hot-melt region 2242 is higher than the lower plastic 2212 when the lower plastic 2212 is hot melted with the hot-melt region 2241, and therefore, poor welding can be avoided when the top cover member 2211 and the shell 222 are welded by using a laser.

In conclusion, after the electrode assembly 223 coated with the insulation patch 224 is mounted to the shell 222, and the hot-melt region 2241 of an insulation patch 225 is hot melted to the lower plastic 2212 of the top cover assembly 221, when the top cover member 2211 and the shell 222 are welded together by using a laser, the non-hot-melt region 2242 of the insulation patch 224 is lower than the hot-melt region 2241, so that the non-hot-melt region 2242 of the insulation patch 224 can be avoided to interfere with a welding position between the top cover member 2211 and the shell 222. Therefore, when the top cover member 2211 and the shell 222 are welded, no dry joint occurs, which helps improve sealing between the top cover member 2211 and the shell 222, prevents leakage of the electrode assembly 223, and further improves safety of the electrode assembly 223.

According to some embodiments of the present disclosure, with reference to FIG. 6, an opening in a shape of a rectangle is formed when the insulation patch 224 coats the electrode assembly. A side wall of the insulation patch 224 corresponding to a long edge of the rectangle has a plurality of the hot-melt regions 2241. A groove is formed in adjacent two of the hot-melt regions 2241, so that the non-hot-melt region 2242 is lower than the hot-melt region 2241.

In this embodiment, a groove is formed between adjacent hot-melt regions 2241, so that the non-hot-melt region 2242 is lower than the hot-melt region 2241, and a plurality of hot-melt regions 2241 are disposed on a long edge of the opening of the insulation patch 224, to better match with a hot-melt position of the lower plastic, so that the hot-melt region 2241 of the insulation patch 224 is better hot melted together with the hot-melt position of the lower plastic, and connection strength of the insulation patch 224 and the lower plastic is increased. It should be noted that, in this embodiment and the accompanying drawings, that three hot-melt regions 2241 are disposed on a long edge of the opening of the insulation patch 224 is used as an example for description, but how many hot-melt regions 2241 are disposed on a long edge of the opening of the insulation patch 224 is not limited. In an actual application, a quantity of hot-melt regions 2241 disposed on a long edge of the opening of the insulation patch 224 is set according to a hot-melt position of the lower plastic.

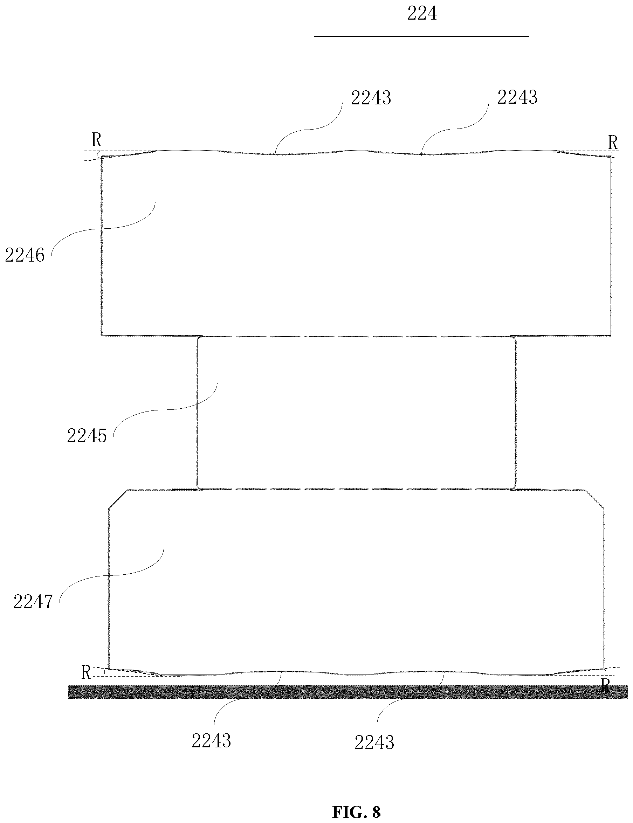

According to some embodiments of the present disclosure, the groove is in a square or arc shape. As shown in FIG. 8, FIG. 8 is an unfolded diagram of the insulation patch 224 according to an embodiment of the present disclosure, where the groove is an arc-shaped groove 2243. The groove is designed as the arc-shaped groove 2243, so that the groove is easier to be formed in the adjacent hot-melt region 2241 and easy to process.

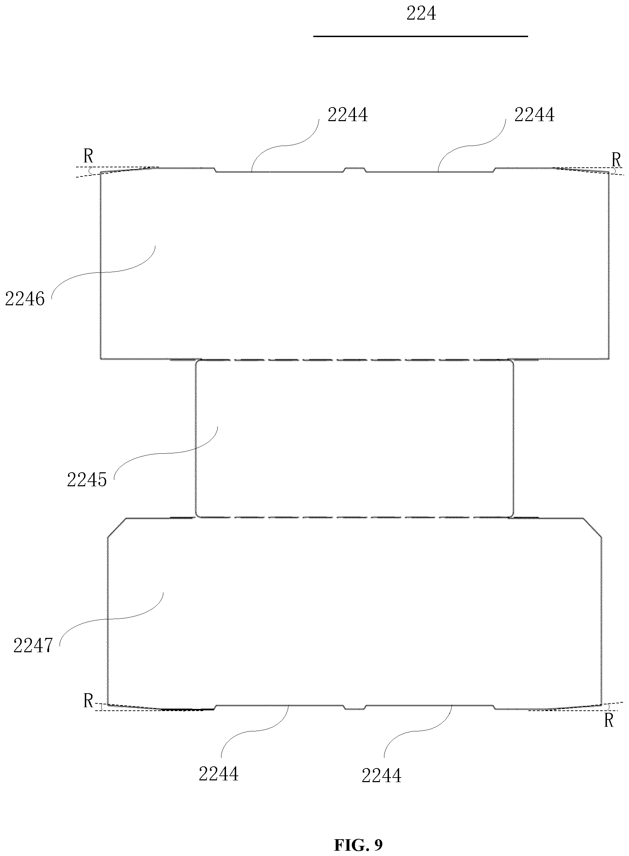

Alternatively, in another embodiment, as shown in FIG. 9, FIG. 9 is an unfolded diagram of another insulation patch 224 according to an embodiment of the present disclosure, where the groove is a square groove 2244. The groove is designed as the square groove 2244, so that the groove is easier to be formed in the adjacent hot-melt region 2241 and easy to process.

According to some embodiments of the present disclosure, with reference to FIG. 6, a depth H of the groove ranges from 2 mm to 5 mm. For example, the depth H of the groove is 2 mm, 3 mm..., or 5 mm, which is not listed herein. In this embodiment, a phenomenon that the non-hot-melt region 2242 of the insulation patch 224 may interfere with a welding position between the top cover assembly and the shell because the depth H of the groove is too small (for example, less than 2 mm) can be further avoided. In this embodiment, a phenomenon that a part of the electrode assembly may be exposed and be in contact with the shell when the electrode assembly is coated with the insulation patch 224 because the depth H of the groove is too large (for example, greater than 5 mm) can be further avoided.

According to some embodiments of the present disclosure, with reference to FIG. 6, an opening in a shape of a rectangle is formed when the insulation patch 224 coats the electrode assembly. A side wall of the insulation patch 224 corresponding to a short edge of the rectangle has one hot-melt region 2241. Generally, there is one hot-melt position corresponding to a short edge of the insulation patch 224. Therefore, in this design manner, the insulation patch 224 can better match the hot-melt position of the lower plastic, so that the hot-melt region 2241 of the insulation patch 224 is better hot melted together with the hot-melt position of the lower plastic.

According to some embodiments of the present disclosure, as shown in FIG. 8 and FIG. 9, an orthographic projection along a thickness direction of the insulation patch 224 when the insulation patch 224 is unfolded is I-shaped, and includes a first part 2245 located in the middle and a second part 2246 and a third part 2247 located at two ends of the first part 2245. The first part 2245 is configured to cover a bottom surface of the electrode assembly, and the second part 2246 and the third part 2247 are folded separately toward the electrode assembly, so that the second part 2246 and the third part 2247 that do not protrude from the first part 2245 respectively cover a first side and a second side of the electrode assembly that are opposite to each other, where the first side and the second side respectively correspond to two long edges of the rectangle. The second part 2246 and the third part 2247 that protrude from the first part 2245 are folded separately toward the electrode assembly, and cover a third side and a fourth side of the electrode assembly that are opposite to each other, where the third side and the fourth side respectively correspond to two short edges of the rectangle.

In this embodiment, the orthographic projection along a thickness direction of the insulation patch 224 when the insulation patch 224 is unfolded is I-shaped, so that a manner of coating the electrode assembly with the insulation patch 224 is simpler, and time for assembling can be reduced.

According to some embodiments of the present disclosure, with reference to FIG. 6, there is an overlap region when the second part 2246 and the third part 2247 that protrude from the first part 2245 cover the third side and the fourth side, and the overlap region forms the hot-melt region 2241. The hot-melt region 2241 is formed by using the foregoing overlap region, so that strength of the hot-melt region 2241 can be increased.

According to some embodiments of the present disclosure, with reference to FIG. 8 and FIG. 9, chamfered spacers R are disposed at corner positions of the second part 2246 and the third part 2247 that are away from the first part 2245. By disposing the chamfered spacers R, an overlap region between the second part 2246 and the third part 2247 can be prevented from interfering with the welding position between the top cover assembly and the shell due to bulge.

According to some embodiments of the present disclosure, with reference to FIG. 8 and FIG. 9, an angle of a chamfered spacer R ranges from 4 degrees to 20 degrees. For example, 4 degrees, 8 degrees..., or 20 degrees, which is not listed herein. In this embodiment, a phenomenon that the non-hot-melt region 2242 of the insulation patch 224 may interfere with the welding position between the top cover assembly and the shell because the angle of the chamfered spacer R is too small (for example, less than 4 degrees) can be further avoided. In this embodiment, a phenomenon that a part of the electrode assembly may be exposed and be in contact with the shell when the electrode assembly is coated with the insulation patch 224 because the angle of the chamfered spacer is too large (for example, greater than 20 degrees) can be further avoided.

According to some embodiments of the present disclosure, with reference to FIG. 8 and FIG. 9, a shape of the chamfered spacer R is a triangle or a trapezoid. The shape of the chamfered spacer R is designed as a triangle or a trapezoid, so that an overlap region formed by the second part 2246 and the third part 2247 after the electrode assembly is coated can better match the hot-melt position of the lower plastic, and the chamfered spacer R is easier to be processed.

According to some embodiments of the present disclosure, the present disclosure provides an insulation patch configured to coat the electrode assembly. As shown in FIG. 6, a side edge of the insulation patch 224 has the hot-melt region 2241 and the non-hot-melt region 2242. The hot-melt region 2241 is configured to hot melt with a lower plastic, and the non-hot-melt region 2242 is lower than the hot-melt region 2241.

An opening in a shape of a rectangle is formed when the insulation patch 224 coats the electrode assembly. A side wall of the insulation patch 224 corresponding to a long edge of the rectangle has a plurality of the hot-melt regions. A side wall of the insulation patch 224 corresponding to a short edge of the rectangle has one hot-melt region. A groove is formed in adjacent two of the hot-melt regions 224 on the side wall of the insulation patch 224 corresponding to the long edge of the rectangular, so that the non-hot-melt region 2242 is lower than the hot-melt region 2241.

As shown in FIG. 8 and FIG. 9, an orthographic projection along a thickness direction of the insulation patch 224 when the insulation patch 224 is unfolded is I-shaped, and includes the first part 2245 located in the middle and the second part 2246 and the third part 2247 located at two ends of the first part 2245. The first part 2245 is configured to cover a bottom surface of the electrode assembly, and the second part 2246 and the third part 2247 are folded separately toward the electrode assembly, so that the second part 2246 and the third part 2247 that do not protrude from the first part 2245 respectively cover the first side and the second side of the electrode assembly that are opposite to each other, where the first side and the second side respectively correspond to the two long edges of the rectangle. The second part 2246 and the third part 2247 that protrude from the first part 2245 are folded separately toward the electrode assembly, and cover the third side and the fourth side of the electrode assembly that are opposite to each other, where the third side and the fourth side respectively correspond to the two short edges of the rectangle. There is an overlap region when the second part 2246 and the third part 2247 that protrude from the first part 2245 cover the third side and the fourth side, and the overlap region forms the hot-melt region 2241.

In the technical solution of the embodiments of the present disclosure, after the electrode assembly 223 coated with the insulation patch 224 is mounted to the shell 222, and the hot-melt region 2241 of the insulation patch 224 is hot melted to the lower plastic of the top cover assembly, when the top cover assembly and the shell are welded together by using a laser, the non-hot-melt region 2242 of the insulation patch 224 is lower than the hot-melt region 2241, so that the non-hot-melt region 2242 of the insulation patch 224 can be avoided to interfere with a welding position between the top cover assembly and the shell. Therefore, when the top cover assembly and the shell are welded, no dry joint occurs, which helps improve sealing between the top cover assembly and the shell, prevents leakage of the electrode assembly, and further improves safety of the electrode assembly.

Finally, it should be noted that the foregoing embodiments are merely for describing the technical solutions of the present disclosure, but not for limiting the present disclosure. Although the present disclosure is described in detail with reference to the foregoing embodiments, a person of ordinary skill in the art should understand that they may still make modifications to the technical solutions described in the foregoing embodiments or make equivalent replacements to some or all technical features thereof; and these modifications or replacements do not make the essence of corresponding technical solutions departing from the scope of the technical solutions of the embodiments of the present disclosure, and shall fall within the scope of claims and specification of the present disclosure. In particular, as long as there is no structural conflict, the technical features in the embodiments may be combined in any way. The present disclosure is not limited to the specific embodiments disclosed herein, but should include all technical solutions falling within the scope of the claims.

## Claims

1. An insulation patch, configured to coat an electrode assembly, wherein:
a side edge of the insulation patch has a hot-melt region and a non-hot-melt region, the hot-melt region is configured to hot melt with a lower plastic, and the non-hot-melt region is lower than the hot-melt region.

2. The insulation patch according to claim 1, wherein an opening in a shape of a rectangle is formed when the insulation patch coats the electrode assembly;
a side wall of the insulation patch corresponding to a long edge of the rectangle has a plurality of the hot-melt regions; and
a groove is formed in adjacent two of the hot-melt regions, so that the non-hot-melt region is lower than the hot-melt region.

3. The insulation patch according to claim 2, wherein the groove is in a square or arc shape.

4. The insulation patch according to claim 2 or 3, wherein a depth of the groove ranges from 2 mm to 5 mm.

5. The insulation patch according to claim 2, wherein a side wall of the insulation patch corresponding to a short edge of the rectangle has one hot-melt region.

6. The insulation patch according to claim 5, wherein an orthographic projection along a thickness direction of the insulation patch when the insulation patch is unfolded is I-shaped, and comprises a first part located in the middle and a second part and a third part located at two ends of the first part;
the first part is configured to cover a bottom surface of the electrode assembly, the second part and the third part are folded separately toward the electrode assembly, so that the second part and the third part that do not protrude from the first part respectively cover a first side and a second side of the electrode assembly that are opposite to each other, and the first side and the second side respectively correspond to long edges of the rectangle; and
the second part and the third part that protrude from the first part are folded separately toward the electrode assembly, and cover a third side and a fourth side of the electrode assembly that are opposite to each other, and the third side and the fourth side respectively correspond to short edges of the rectangle.

7. The insulation patch according to claim 6, wherein there is an overlap region when the second part and the third part that protrude from the first part cover the third side and the fourth side, and the overlap region forms the hot-melt region.

8. The insulation patch according to claim 7, wherein chamfered spacers are disposed at corner positions of the second part and the third part that are away from the first part.

9. The insulation patch according to claim 8, wherein an angle of the chamfered spacer ranges from 4 degrees to 20 degrees.

10. The insulation patch according to claim 8, wherein a shape of the chamfered spacer is a triangle or a trapezoid.

11. A battery cell, comprising:
a top cover assembly, comprising a top cover member and a lower plastic bonded to the top cover member;
a shell that forms an enclosed space with the top cover assembly;
an electrode assembly, located in the enclosed space; and
the insulation patch according to any one of claims 1 to 10, wherein the insulation patch is configured to coat the electrode assembly in the enclosed space, and is hot melted to the lower plastic via the hot-melt region; and a pole on the top cover member is connected to a tab of the electrode assembly.

12. The battery cell according to claim 11, wherein the battery cell further comprises:
a switching member, wherein the switching member is located between the top cover member and the electrode assembly, and the pole on the top cover member is connected to the tab of the electrode assembly by using the switching member.

13. A battery, wherein the battery comprises a plurality of the battery cells according to claim 11 or 12.

14. A device using a battery as a power source, wherein the battery is the battery according to claim 13.
